(19) Europäisches Patentamt
European Patent Office
Office européen des brevets

(11) **EP 4 243 041 A1**

(12) **EUROPEAN PATENT APPLICATION**
published in accordance with Art. 153(4) EPC

(43) Date of publication:
**13.09.2023 Bulletin 2023/37**

(21) Application number: **21889429.3**

(22) Date of filing: **19.10.2021**

(51) International Patent Classification (IPC):
*H01F 27/22* (2006.01)   *H02J 50/10* (2016.01)
*H01F 38/14* (2006.01)   *H02J 50/00* (2016.01)
*B60L 53/12* (2019.01)

(52) Cooperative Patent Classification (CPC):
**B60L 53/12; H01F 27/22; H01F 38/14; H02J 50/00; H02J 50/10;** Y02T 10/70

(86) International application number:
**PCT/KR2021/014572**

(87) International publication number:
**WO 2022/097964 (12.05.2022 Gazette 2022/19)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **09.11.2020 KR 20200148554**

(71) Applicant: SKC Co., Ltd.
**Suwon-si, Gyeonggi-do 16338 (KR)**

(72) Inventors:
• KIM, Nah Young
  Suwon-si, Gyeonggi-do 16338 (KR)
• LEE, Seunghwan
  Suwon-si, Gyeonggi-do 16338 (KR)
• CHOI, Jong Hak
  Suwon-si, Gyeonggi-do 16338 (KR)
• KIM, Tae Kyoung
  Suwon-si, Gyeonggi-do 16338 (KR)

(74) Representative: Dehns
St. Bride's House
10 Salisbury Square
London EC4Y 8JD (GB)

(54) **WIRELESS CHARGING DEVICE AND TRANSPORTATION MEANS COMPRISING SAME**

(57) A wireless charging device according to one embodiment has an inductance deviation at 80°C of 0 or more, and has a magnetic part that has a permeability change rate ($\Delta P1$) of 0/°C or more, thus having excellent high-temperature stability, and being able to maintain excellent charging efficiency even at high temperature. Therefore, the wireless charging device can be useful in a transportation means such as an electric vehicle requiring large-capacity power transmission between a transmitter and a receiver.

[Fig. 7]

EP 4 243 041 A1

**Description**

**Technical Field**

Embodiments relate to a wireless charging device and to a transportation means comprising the same. More specifically, the embodiments relate to a wireless charging device having excellent charging efficiency at high temperatures by virtue of excellent high-temperature stability and a transportation means comprising the same.

**Background Art**

In recent years, the information and communication field is being developed at a very fast pace, and various technologies that comprehensively combine electricity, electronics, communication, and semiconductor are continuously being developed. In addition, as electronic devices tend to be more mobile, research on wireless communication and wireless power transmission technologies is being actively conducted in the communication field. In particular, research on a method for wirelessly transmitting power to electronic devices is being actively conducted.

The wireless power transmission refers to wirelessly transmitting power through space using inductive coupling, capacitive coupling, or an electromagnetic field resonance structure such as an antenna without physical contact between a transmitter that supplies power and a receiver that receives power. The wireless power transmission is suitable for portable communication devices, electric vehicles, and the like that require a large-capacity battery. Since the contacts are not exposed, there is little risk of a short circuit, and a charging failure phenomenon in a wired method can be prevented.

Meanwhile, as interest in electric vehicles has rapidly increased in recent years, interest in building charging infrastructure is increasing. Various charging methods have already appeared, such as electric vehicle charging using home chargers, battery replacement, rapid charging devices, and wireless charging devices. A new charging business model has also begun to appear (see Korean Laid-open Patent Publication No. 2011-0042403). In addition, electric vehicles and charging stations that are being tested begin to stand out in Europe. In Japan, electric vehicles and charging stations are being piloted, led by automakers and power companies.

A wireless charging device generates heat due to the resistance of a coil unit and the magnetic loss of a magnetic unit during the wireless charging operation. In particular, the magnetic unit in a wireless charging device inevitably generates high-temperature heat during wireless charging. The generated heat may change the magnetic characteristics of the magnetic unit and cause safety problems such as damage to the wireless charging device and the possibility of breaking the power conversion circuit, thereby limiting its usability or reducing charging efficiency.

[Prior Art Document]

[Patent Document]

(Patent Document 1) Korean Laid-open Patent Publication No. 2011-0042403

**Disclosure of Invention**

**Technical Problem**

The present invention is devised to solve the problems of the prior art.

A technical problem to be solved by the present invention is to provide a wireless charging device having excellent charging efficiency at high temperatures by imparting high-temperature stability.

Another technical problem to be solved by the present invention is to provide a transportation means comprising the wireless charging device.

**Solution to Problem**

According to an embodiment, there is provided a wireless charging device, which comprises a coil unit; and a magnetic unit disposed on the coil unit, wherein the inductance deviation (ID1) at 80°C represented by the following Equation 1 is 0 or more:

[Equation 1]

$$ID1 = \frac{I80 - I25}{I25}$$

Here, I25 is the inductance of the wireless charging device measured at a temperature of 25°C, and I80 is the inductance of the wireless charging device measured at a temperature of 80°C.

According to another embodiment, there is provided a wireless charging device, which comprises a coil unit; and a magnetic unit disposed on the coil unit, wherein the first magnetic permeability change rate ($\Delta$P1) of the magnetic unit represented by the following Equation 6 is 0/°C or more:

[Equation 6]

$$\Delta P1 = \frac{P20 - P0}{20\,°C}$$

Here, P20 is the magnetic permeability of the magnetic unit measured at a temperature of 20°C, and P0 is the magnetic permeability of the magnetic unit measured at a temperature of 0°C.

According to another embodiment, there is provided a transportation means, which comprises a wireless charging device, wherein the wireless charging device comprises a coil unit; and a magnetic unit disposed on the coil unit, and the inductance deviation (ID1) of the wireless charging device at 80°C represented by the following Equation 1 is 0 or more, or the first magnetic permeability change rate ($\Delta$P1) of the magnetic unit represented by the following Equation 6 is 0/°C or more, or both are satisfied:

[Equation 1]

$$ID1 = \frac{I80 - I25}{I25}$$

Here, I25 is the inductance of the wireless charging device measured at a temperature of 25°C, and I80 is the inductance of the wireless charging device measured at a temperature of 80°C,

[Equation 6]

$$\Delta P1 = \frac{P20 - P0}{20\,°C}$$

Here, P20 is the magnetic permeability of the magnetic unit measured at a temperature of 20°C, and P0 is the magnetic permeability of the magnetic unit measured at a temperature of 0°C.

**Advantageous Effects of Invention**

According to the embodiment, as the wireless charging device of the present invention has an inductance deviation of 0 or more at 80°C, it enhances high-temperature stability, whereby it is possible to provide a wireless charging device having excellent charging efficiency even at high temperatures.

In addition, in the wireless charging device, as the magnetic permeability change rate of the magnetic unit is 0/°C or more, the thermal resistance is enhanced, thereby further enhancing the charging efficiency.

Accordingly, the wireless charging device can be advantageously used in electric vehicles requiring large-capacity power transmission between a transmitter and a receiver, as well as various personal transportation means such as electric motorcycles, electric kickboards, electric scooters, electric wheelchairs, electric bicycles, and the like.

**Brief Description of Drawings**

Fig. 1 is an exploded perspective view of a wireless charging device according to an embodiment.

Fig. 2 is a perspective view of the wireless charging device according to an embodiment.

Fig. 3a is a cross-sectional view of the wireless charging device cut along line A-A' in Fig. 2.

Fig. 3b is a cross-sectional view of a wireless charging device according to another embodiment.

Fig. 4 shows the charging efficiency with respect to the wireless charging time of the wireless charging devices of Example 1 and Comparative Example 1.

Fig. 5 shows the heat generation temperature with respect to the wireless charging time of the wireless charging devices of Example 1 and Comparative Example 1.

Fig. 6 shows the inductance change rate at 150°C with respect to the wireless charging time of the wireless charging devices of Example 1 and Comparative Example 1.

Fig. 7 shows the inductance change rate with respect to the temperature elevation from -40°C to 120°C for the wireless charging devices of Example 1 and Comparative Example 1.

Fig. 8 shows the magnetic permeability with respect to the temperature elevation from -40°C to 120°C for the polymer-type magnetic units of Example 1 and Comparative Example 1.

Fig. 9 illustrates a process of forming a magnetic unit through a mold according to an embodiment.

Fig. 10 shows a transportation means (electric vehicle) provided with a wireless charging device according to an embodiment.

**Best Mode for Carrying out the Invention**

Hereinafter, specific embodiments for implementing the idea of the present invention will be described in detail with reference to the drawings.

Further, in the description of the present invention, if it is determined that a detailed description of a related known constitution or function may obscure the gist of the present invention, the detailed description thereof will be omitted.

In addition, in the accompanying drawings, some components are exaggerated, omitted, or schematically illustrated, and the size of each component does not fully reflect the actual size.

The terms in the present specification are used only to describe specific embodiments and are not intended to limit the present invention. A singular expression encompasses a plural expression unless the context clearly dictates otherwise.

The same reference numerals in the present specification refer to the same elements. In the present specification, in the case where an element is mentioned to be formed "on" or "under" another element, it means not only that one element is directly formed "on" or "under" another element, but also that one element is indirectly formed on or under another element with other element(s) interposed between them.

In addition, the term on or under with respect to each element may be referenced to the drawings. For the sake of description, the sizes of individual elements in the appended drawings may be exaggeratedly depicted, and they may differ from the actual sizes.

In addition, the term "comprising," as used herein, specifies a particular characteristic, region, integer, step, operation, element, and/or component, and it does not exclude the presence or addition of other specific characteristic, region, integer, step, operation, element, component, and/or group.

In addition, all numbers expressing the physical properties, dimensions, and the like of elements used herein are to be understood as being modified by the term "about" unless otherwise indicated.

In the present specification, a singular expression is understood to encompass a singular or plural expression, interpreted in context, unless otherwise specified.

**[Wireless charging device]**

The wireless charging device according to an embodiment of the present invention comprises a coil unit; and a magnetic unit disposed on the coil unit, wherein the inductance deviation (ID1) at 80°C represented by the following Equation 1 is 0 or more:

[Equation 1]

$$ID1 = \frac{I80 - I25}{I25}$$

Here, I25 is the inductance of the wireless charging device measured at a temperature of 25°C, and I80 is the inductance of the wireless charging device measured at a temperature of 80°C.

As the wireless charging device has an inductance deviation of 0 or more at 80°C, it has enhanced high-temperature stability, whereby it is possible to maintain excellent charging efficiency even at high temperatures.

Specifically, the inductance deviation (ID1) at 80°C of the wireless charging device is a value obtained by dividing the difference (I80 - I25) between the inductance (I80) of the wireless charging device measured at a temperature of 80°C and the inductance (I25) of the wireless charging device measured at a temperature of 25°C by the inductance of the wireless charging device measured at a temperature of 25°C. The inductance deviation (ID1) at 80°C of the wireless charging device is characterized by having a value of 0 or positive (+).

According to an embodiment of the present invention, as the inductance deviation (ID1) at 80°C of the wireless charging device is 0 or more, charging efficiency can be enhanced, or excellent charging efficiency can be maintained or its reduction can be minimized even when the temperature is elevated.

Specifically, the inductance deviation (ID1) at 80°C of the wireless charging device may be 0 or more, greater than 0, 0.0001 or more, 0.0005 or more, 0.001 or more, 0.005 or more, 0.008 or more, or 0.01 or more. In addition, the inductance deviation (ID1) at 80°C of the wireless charging device may be 1 or less, less than 1, 0.9 or less, 0.8 or less, 0.7 or less, 0.6 or less, 0.5 or less, 0.4 or less, 0.3 or less, 0.2 or less, 0.1 or less, 0.09 or less, or 0.08 or less. The inductance deviation (ID1) at 80°C of the wireless charging device may be, for example, 0 to 1, greater than 0 to less than 1, 0.0001 to 0.9, 0.0005 to 0.8, or 0.001 to 0.7.

If the inductance deviation (ID1) at 80°C of the wireless charging device has a negative (-) value, charging efficiency may decrease; in particular, when the temperature rises, the charging efficiency may steeply decrease due to the reduced high-temperature stability.

In the wireless charging device according to an embodiment of the present invention, the inductance deviation (ID2) at 60°C represented by the following Equation 2 may be 0 or more.

[Equation 2]

$$ID2 = \frac{I60 - I25}{I25}$$

Here, I25 is the inductance of the wireless charging device measured at a temperature of 25°C, and I60 is the inductance of the wireless charging device measured at a temperature of 60°C.

Specifically, the inductance deviation (ID2) at 60°C of the wireless charging device may be 0 or more, greater than 0, 0.0001 or more, 0.0005 or more, 0.001 or more, 0.005 or more, 0.008 or more, or 0.01 or more. In addition, the inductance deviation (ID2) at 60°C of the wireless charging device may be 1 or less, less than 1, 0.9 or less, 0.8 or less, 0.7 or less, 0.6 or less, 0.5 or less, 0.4 or less, 0.3 or less, 0.2 or less, 0.1 or less, 0.09 or less, or 0.08 or less. The inductance deviation (ID2) at 60°C of the wireless charging device may be, for example, 0 to 1, greater than 0 to less than 1, 0.0001 to 0.9, 0.0005 to 0.8, 0.001 to 0.7, or 0.001 to 0.6.

According to an embodiment of the present invention, as the inductance deviation (ID2) at 60°C of the wireless charging device is 0 or more, the high-temperature stability is excellent; thus, excellent charging efficiency can be maintained or its reduction can be minimized even when the temperature is elevated.

In the wireless charging device according to an embodiment of the present invention, the inductance deviation (ID3) at 100°C represented by the following Equation 3 may be 0 or more.

[Equation 3]

$$ID3 = \frac{I100 - I25}{I25}$$

Here, I25 is the inductance of the wireless charging device measured at a temperature of 25°C, and I100 is the inductance of the wireless charging device measured at a temperature of 100°C.

Specifically, the inductance deviation (ID3) at 100°C of the wireless charging device may be 0 or more, greater than 0, 0.0001 or more, 0.0005 or more, 0.001 or more, 0.005 or more, 0.008 or more, or 0.01 or more. In addition, the inductance deviation (ID3) at 100°C of the wireless charging device may be 1 or less, less than 1, 0.9 or less, 0.8 or less, 0.7 or less, 0.6 or less, 0.5 or less, 0.4 or less, 0.3 or less, 0.2 or less, 0.1 or less, 0.09 or less, or 0.08 or less. The inductance deviation (ID3) at 100°C of the wireless charging device may be, for example, 0 to 1, greater than 0 to less than 1, 0.0001 to 0.9, 0.0005 to 0.8, 0.001 to 0.5, or 0.001 to 0.1.

According to an embodiment of the present invention, as the inductance deviation (ID3) at 100°C of the wireless charging device is 0 or more, the high-temperature stability is excellent; thus, excellent charging efficiency can be maintained or its reduction can be minimized even when the temperature is elevated.

In the wireless charging device according to an embodiment of the present invention, the inductance deviation (ID4) at 40°C represented by the following Equation 5 may be 0 or more.

[Equation 5]

$$ID4 = \frac{I40 - I25}{I25}$$

Here, I25 is the inductance of the wireless charging device measured at a temperature of 25°C, and I40 is the inductance of the wireless charging device measured at a temperature of 40°C.

Specifically, the inductance deviation (ID4) at 40°C of the wireless charging device may be 0 or more, greater than 0, 0.0001 or more, 0.0005 or more, 0.001 or more, 0.005 or more, 0.008 or more, or 0.01 or more. In addition, the inductance deviation (ID4) at 40°C of the wireless charging device may be 1 or less, less than 1, 0.9 or less, 0.8 or less, 0.7 or less, 0.6 or less, 0.5 or less, 0.4 or less, 0.3 or less, 0.2 or less, 0.1 or less, 0.09 or less, 0.08 or less, or 0.05 or less. The inductance deviation (ID4) at 40°C of the wireless charging device may be, for example, 0 to 1, greater than 0 to less than 1, 0.0001 to 0.9, 0.0005 to 0.8, 0.001 to 0.7, 0.001 to 0.5, or 0.001 to 0.4.

According to an embodiment of the present invention, as the inductance deviation (ID4) at 40°C of the wireless charging device is 0 or more, the high-temperature stability is excellent; thus, excellent charging efficiency can be maintained or its reduction can be minimized even when the temperature is elevated.

In the wireless charging device according to an embodiment of the present invention, the inductance change rate (ΔID) represented by the following Equation 4 may be greater than 0/°C.

[Equation 4]

$$\Delta ID = \frac{ID3 - ID4}{20\,°C}$$

Here, ID3 and ID4 are as described above.

The inductance change rate (ΔID) is a value obtained by dividing the difference between the inductance deviation (ID3) at 100°C and the inductance deviation (ID4) at 40°C by 20°C.

Specifically, the inductance change rate (ΔID) of the wireless charging device may be 0.00001/°C or more, 0.00002/°C or more, 0.00003/°C or more, 0.00004/°C or more, 0.00005/°C or more, or 0.00006/°C or more. In addition, the inductance change rate (ΔID) of the wireless charging device may be 0.5/°C or less, 0.4/°C or less, 0.3/°C or less, 0.2/°C or less, 0.1/°C or less, 0.05/°C or less, 0.02/°C or less, 0.01/°C or less, 0.005/°C or less, or 0.001/°C or less. The inductance change rate (ΔID) of the wireless charging device may be, for example, greater than 0/°C to 0.5/°C, greater than 0/°C to 0.4/°C, 0.00001/°C to 0.3/°C, 0.00002/°C to 0.02/°C, 0.00003/°C to 0.005/°C, 0.00004/°C to 0.001/°C.

According to an embodiment of the present invention, as the inductance change rate (ΔID) of the wireless charging device is greater than 0/°C, the high-temperature stability is excellent; thus, excellent charging efficiency can be maintained or its reduction can be minimized even when the temperature is elevated.

Inductance refers to the characteristic of a conductor that hinders a change in current and refers to the ratio of the counter-electromotive force generated by electromagnetic induction according to a change in the flowing current.

Various factors may have an impact on inductance. Examples thereof include the material and permeability of a magnetic unit, the number of windings of a coil, the size and cross-sectional areas of the coil and the magnetic unit. In particular, inductance may be determined by the material or characteristics of a magnetic unit.

The inductance, inductance deviation, or inductance change rate according to an embodiment of the present invention may be an inductance, an inductance deviation, or an inductance change rate of the wireless charging device. Specifically, they may be an inductance, an inductance deviation, or an inductance change rate of a wireless charging pad in which a coil unit, a magnetic unit, a spacer (a thickness of 5T), and a shield unit are sequentially stacked. The inductance is measured using, for example, a rectangular planar coil having an inductance of 30 μH, a coil diameter of 5 mm, and 1000 strands, a magnetic unit having a volume of 320 mm × 320 mm × 5 mm, and an aluminum (Al) shield unit of 350 mm × 350 mm × 2 mm and using an LCR meter (IM3536 device of Hioki). Once the device has been connected to the coil unit, the inductance (Ls) may be measured while the LCR meter is set to 85 kHz, from which the inductance deviation and inductance change rate may be measured.

The wireless charging device may have an inductance at 20°C of 30 to 50 μH, 35 to 45 μH, 38 to 45 μH, 39 to 43 μH, 40.07 to 43 μH, or 40.09 to 43 μH.

The wireless charging device may have an inductance at 25°C of 35 to 50 μH, 38 to 50 μH, 40 to 50 μH, 40 to 45 μH, or 40 to 43 μH.

The wireless charging device may have an inductance at 40°C of 39 to 52 μH, 39 to 50 μH, 40 to 50 μH, 42 to 50 μH, or 42 to 45 μH.

The wireless charging device may have an inductance at 60°C of 37 to 55 μH, 39 to 52 μH, 40 to 50 μH, 42 to 50 μH, or 42 to 48 μH.

The wireless charging device may have an inductance at 80°C of 35 to55 μH, 38 to52 μH, 40 to 50 μH, 42 to 50 μH, or 42 to 48 μH.

The wireless charging device may have an inductance at 100°C of 32 to55 μH, 35 to52 μH, 38 to 50 μH, 40 to 50 μH, or 42 to 48 μH.

The wireless charging device may have an inductance at 120°C of 30 to52 μH, 35 to52 μH, 38 to 50 μH, 40 to 50 μH, or 40 to 48 μH.

If the wireless charging device has an inductance that satisfies the above range at each temperature, the wireless charging device may have the physical properties desired in the embodiment of the present invention. As a result, it is possible to minimize the deformation and breakage of the magnetic unit at high temperatures and to enhance the charging efficiency. In addition, since high-temperature stability can be imparted, excellent charging efficiency can be maintained or its reduction can be minimized even when the temperature is elevated.

In addition, the wireless charging device may satisfy Equations 1 to 5 by appropriately adjusting its inductance at each temperature.

Meanwhile, the wireless charging device may have an inductance change rate of 10% or less when the temperature is elevated from 25°C to 120°C. According to the embodiment, if the inductance change rate is 10% or less when the temperature is elevated from 25°C to 120°C, the wireless charging device has excellent high-temperature stability, and excellent charging efficiency can be maintained at high temperatures.

Specifically, the inductance change rate may be, for example, 9% or less, for example, 8% or less, for example, 7% or less, for example, 6% or less, for example, 4% or less, for example, 3.9% or less, for example, 3.8% or less, for example, 3.7% or less, for example, 3% or less, for example, 2% or less, for example, 1% or less, when the temperature is elevated from 25°C to 120°C. Thermal resistance and magnetic characteristics may be enhanced as the inductance change rate is lower.

In general, inductance tends to decrease steeply as the temperature is elevated.

In contrast, the wireless charging device according to an embodiment of the present invention is characterized in that the inductance change rate is as low as 10% or less as the temperature is elevated. That is, since the wireless charging device having the inductance characteristic can minimize deformation and breakage of the magnetic unit at high temperatures and can impart high-temperature stability, it can satisfy excellent charging efficiency even when the temperature is elevated.

Meanwhile, the wireless charging device according to another embodiment of the present invention comprises a coil unit; and a magnetic unit disposed on the coil unit, wherein the first magnetic permeability change rate ($\Delta$P1) represented by the following Equation 6 is 0/°C or more.

[Equation 6]

$$\Delta P1 = \frac{P20 - P0}{20\,°C}$$

Here, P20 is the magnetic permeability of the magnetic unit measured at a temperature of 20°C, and P0 is the magnetic permeability of the magnetic unit measured at a temperature of 0°C.

Specifically, the first magnetic permeability change rate ($\Delta$P1) in the magnetic unit is a value obtained by dividing the difference between the magnetic permeability of the magnetic unit measured at a temperature of 20°C and the magnetic permeability measured at a temperature of 0°C by 20°C.

Specifically, the first magnetic permeability change rate ($\Delta$P1) may be 0/°C or more, greater than 0/°C, 0.0001/°C or more, 0.0005/°C or more, 0.001/°C or more, 0.005/°C or more, 0.008/°C or more, 0.01/°C or more, or 0.1/°C or more. In addition, the first magnetic permeability change rate ($\Delta$P1) may be 3/°C or less, 2/°C or less, 1/°C or less, 0.9/°C or less, 0.8/°C or less, 0.7/°C or less, 0.6/°C or less, or 0.5/°C or less. The first magnetic permeability change rate ($\Delta$P1) may be, for example, 0/°C to 3/°C, greater than 0/°C to 3/°C, 0.0001/°C to 2/°C, 0.0005/°C to 1/°C, 0.001/°C to 0.9/°C, 0.005/°C to 0.8/°C, 0.005/°C to 0.7/°C, or 0.1/°C to 0.6/°C.

According to an embodiment of the present invention, as the first magnetic permeability change rate ($\Delta$P1) is 0/°C or more, the high-temperature stability is excellent; thus, excellent charging efficiency can be maintained or its reduction can be minimized even when the temperature is elevated.

According to another embodiment of the present invention, the magnetic unit has a second magnetic permeability change rate ($\Delta$P2) represented by the following Equation 7 of 0/°C or more.

[Equation 7]

$$\Delta P2 = \frac{P40 - P20}{20\,°C}$$

Here, P20 is the magnetic permeability of the magnetic unit measured at a temperature of 20°C, and P40 is the magnetic permeability of the magnetic unit measured at a temperature of 40°C.

Specifically, the second magnetic permeability change rate ($\Delta$P2) in the magnetic unit is a value obtained by dividing the difference between the magnetic permeability of the magnetic unit measured at a temperature of 40°C and the magnetic permeability measured at a temperature of 20°C by 20°C.

Specifically, the second magnetic permeability change rate ($\Delta$P2) may be 0/°C or more, greater than 0/°C, 0.0001/°C or more, 0.0005/°C or more, 0.001/°C or more, 0.005/°C or more, 0.008/°C or more, 0.01/°C or more, or 0.1/°C or more. In addition, the second magnetic permeability change rate ($\Delta$P2) may be 3/°C or less, 2/°C or less, 1/°C or less, 0.9/°C or less, 0.8/°C or less, 0.7/°C or less, 0.6/°C or less, or 0.5/°C or less. The second magnetic permeability change rate ($\Delta$P2) may be, for example, 0/°C to 3/°C, greater than 0/°C to 3/°C, 0.0001/°C to 2/°C, 0.0005/°C to 1/°C, 0.001/°C to 0.9/°C, 0.005/°C to 0.8/°C, 0.005/°C to 0.7/°C, or 0.1/°C to 0.5/°C.

According to an embodiment of the present invention, as the second magnetic permeability change rate ($\Delta$P2) is 0/°C or more, the high-temperature stability is excellent; thus, excellent charging efficiency can be maintained or its reduction can be minimized even when the temperature is elevated.

In another wireless charging device of the present invention, the magnetic unit may have a maximum magnetic permeability at a temperature of 60°C to 100°C. Specifically, the magnetic unit may have a maximum magnetic permeability at a temperature of 60°C to 90°C. The magnetic permeability (u') at a temperature of 60°C to 100°C may be 90 or more, 95 or more, 98 or more, or 100 or more. In addition, the magnetic permeability (u') at a temperature of 60°C to 100°C may be 110 or less, 105 or less, 103 or less, or 102 or less. The magnetic permeability (u') at a temperature of 60°C to 100°C may be, for example, 90 to 110, 90 to 105, 95 to 105, or 98 to 103.

If the magnetic unit has a maximum magnetic permeability at a temperature of 60°C to 100°C, the thermal resistance can be further enhanced, and excellent charging efficiency can be maintained at high temperatures since high-temperature stability can be imparted to the wireless charging device.

In addition, when the temperature is elevated from 25°C to 120°C, the polymer-type magnetic unit may have a magnetic permeability change rate of 10% or less.

According to the embodiment, as the polymer-type magnetic unit has a magnetic permeability change rate of 10% or less even when the temperature is elevated from 25°C to 120°C, the thermal resistance can be further enhanced, and excellent charging efficiency can be maintained at high temperatures since high-temperature stability can be imparted to the wireless charging device.

Specifically, the magnetic permeability change rate of the magnetic unit may be, for example, 9% or less, for example, 8% or less, for example, 7% or less, for example, 5% or less, for example, 3% or less, for example, 2% or less, for example, 1% or less, for example, 0.5% or less, for example, 0.2% or less, for example, 0.1% or less, for example, 0.07% or less, when the temperature is elevated from 25°C to 120°C.

The magnetic permeability refers to the ratio of the magnetic field flux density that occurs when magnetized under the influence of a magnetic field and the magnetic field strength that appears in a vacuum. The magnetic permeability is affected by the type of a magnetic unit. In general, the magnetic permeability of a magnetic unit may tend to increase with temperature elevation and then steeply decrease from a certain temperature point.

Thermal resistance and magnetic characteristics may be enhanced as the magnetic permeability change rate is lower. In such a case, since it is possible to minimize deformation and breakage of the magnetic unit at high temperatures and to impart high-temperature stability, excellent charging efficiency can be maintained at high temperatures.

If the magnetic unit has a magnetic permeability change rate exceeding 10% in the above temperature range, the thermal resistance may be deteriorated. If the magnetic permeability change rate increases in the above temperature range, resulting in a decrease in thermal resistance, deformation and breakage of the magnetic unit may occur at high temperatures, thereby reducing the magnetic characteristics and reducing the charging efficiency.

According to an embodiment of the present invention, the magnetic permeability is measured at a frequency of 85 kHz using a 4294A device of Agilent.

According to an embodiment of the present invention, the magnetic permeability (u') of the magnetic unit measured at a temperature of 0°C may be 45 to 100, 50 to 100, 55 to 95, 60 to 95, 70 to 90, or 80 to 92.

According to an embodiment of the present invention, the magnetic permeability (u') of the magnetic unit measured at a temperature of 20°C may be 45 to 110, 50 to 110, 55 to 100, 70 to 100, 80 to 95, or 85 to 95.

According to an embodiment of the present invention, the magnetic permeability (u') of the magnetic unit measured at a temperature of 25°C may be 40 to 120, 50 to 120, 60 to 110, 80 to 110, 85 to 100, or 88 to 99.

According to an embodiment of the present invention, the magnetic permeability (u') of the magnetic unit measured at a temperature of 40°C may be 40 to 120, 50 to 120, 60 to 110, 80 to 110, 85 to 105, or 90 to 105.

According to an embodiment of the present invention, the magnetic permeability (u') of the magnetic unit measured at a temperature of 60°C may be 40 to 150, 50 to 140, 80 to 140, 90 to 130, 90 to 120, or 90 to 110.

According to an embodiment of the present invention, the magnetic permeability (u') of the magnetic unit measured at a temperature of 80°C may be 40 to 150, 50 to 140, 80 to 140, 90 to 130, 90 to 120, or 90 to 110.

According to an embodiment of the present invention, the magnetic permeability (u') of the magnetic unit measured at a temperature of 100°C may be 40 to 120, 50 to 120, 60 to 110, 80 to 110, 85 to 105, or 90 to 105.

According to an embodiment of the present invention, the magnetic permeability (u') of the magnetic unit measured at a temperature of 120°C may be 40 to 120, 50 to 120, 60 to 110, 80 to 110, 85 to 105, or 90 to 105.

If the wireless charging device has a magnetic permeability of the magnetic unit that satisfies the above range at each temperature, the wireless charging device may have the physical properties desired in the embodiment of the present invention. As a result, it is possible to minimize the deformation and breakage of the magnetic unit at high temperatures and to enhance the charging efficiency. In addition, since high-temperature stability can be imparted, excellent charging efficiency can be maintained or its reduction can be minimized even when the temperature is elevated.

In addition, when wireless power having a frequency of 85 kHz and an output of 6.6 kW is transmitted to the coil unit for 10 to 30 minutes, the inductance change rate at 150°C may increase to, for example, 0.3% or less, for example, 0.25% or less, or, for example, 0.2% or less. If the inductance change rate at 150°C is increased to greater than 0.3%, the thermal resistance may be deteriorated, and deformation and breakage of the magnetic unit may occur at high temperatures, thereby reducing the magnetic characteristics and reducing the charging efficiency.

Meanwhile, according to an embodiment of the present invention, when the heat generation temperature of the lower surface of the polymer-type magnetic unit is elevated from 25°C to 100°C, the charging efficiency change rate may be 1% or less, for example, 0.8% or less, for example, 0.5% or less, for example, 0.3% or less, for example, 0.2% or less, for example, 0.1% or less.

The heat generation temperature of the lower surface of the magnetic unit is measured for the temperature of the lower surface of the magnetic unit using a T/GUARD 405-SYSTEM manufactured by Qualitrol. Specifically, the heat generation temperature of the lower surface of the magnetic unit is measured based on the center (maximum heat generation temperature) of the first magnetic unit corresponding to the coil unit.

In general, if the heat generation temperature of a magnetic unit increases, the charging efficiency may decrease due to a loss caused by heat generated. However, if the magnetic unit with enhanced thermal resistance according to an embodiment of the present invention is used, it is possible to minimize the reduction in charging efficiency by virtue of its thermal resistance even if heat is generated (even if heat generation is severe). That is, excellent charging efficiency can be maintained even if heat generation increases in the wireless charging device.

According to an embodiment of the present invention, the inductance and magnetic permeability characteristics may be controlled by the material of the magnetic unit.

Specifically, the inductance and magnetic permeability characteristics may be adjusted to a desired range according to an embodiment of the present invention by using a magnetic unit, for example, a polymer-type magnetic unit. In addition, the inductance and magnetic permeability characteristics may vary depending on the type, particle size, and content of a filler contained in the polymer-type magnetic unit. Alternatively, it may vary depending on the type and content of the binder resin contained in the polymer-type magnetic unit. Alternatively, it may vary depending on the type and content of additives added to the polymer-type magnetic unit. Alternatively, since it may vary depending on the combination constituting the polymer-type magnetic unit, an appropriate type and content of the filler, the binder, and/or the additives may be selected to effectively control the inductance and magnetic permeability characteristics.

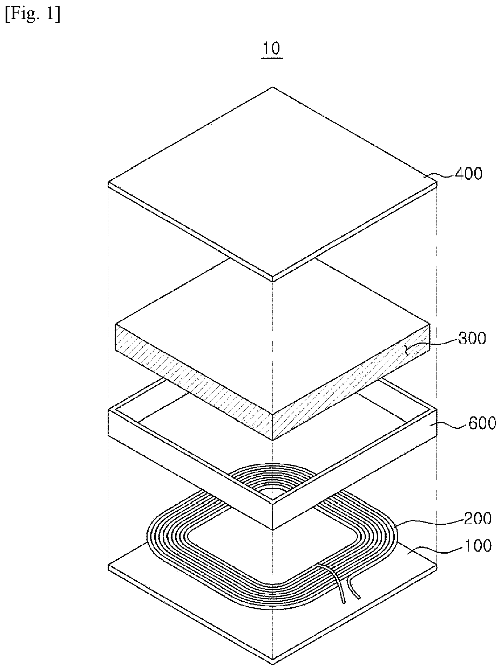

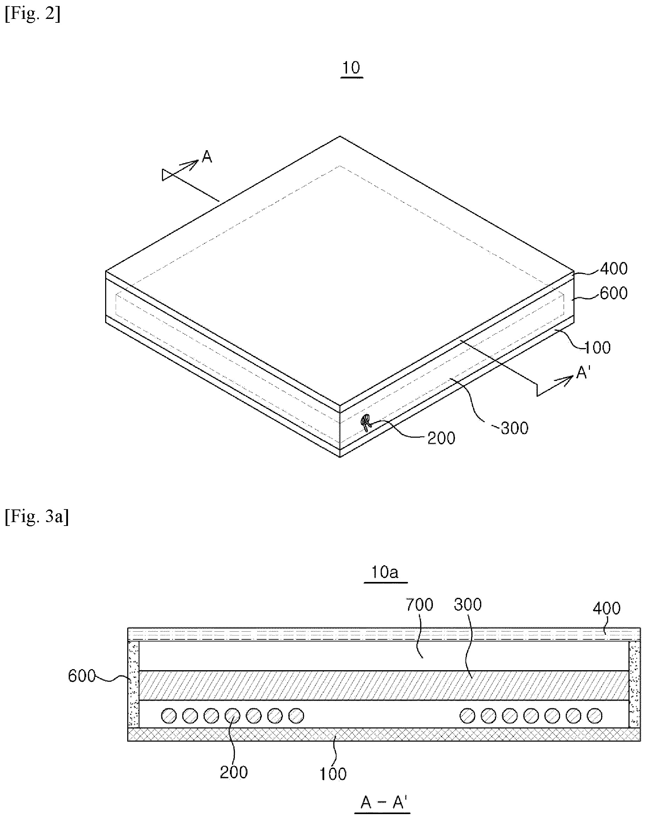

Figs. 1 and 2 are each an exploded perspective view and a perspective view of a wireless charging device according to an embodiment.

Referring to Figs. 1 and 2, the wireless charging device (10) according to an embodiment of the present invention comprises a coil unit (200); and a magnetic unit (300) disposed on the coil unit (200). In addition, the wireless charging device (10) may further comprise a support unit (100) for supporting the coil unit (200), a shield unit (400) disposed on the magnetic unit, and a housing (600) for protecting the components.

Hereinafter, each constitutional element of the wireless charging device will be described in detail.

**Coil unit**

The wireless charging device according to an embodiment of the present invention comprises a coil unit through which an alternating current flows to generate a magnetic field.

The coil unit may comprise a conductive wire.

The conductive wire comprises a conductive material. For example, the conductive wire may comprise a conductive metal. Specifically, the conductive wire may comprise at least one metal selected from the group consisting of copper, nickel, gold, silver, zinc, and tin.

In addition, the conductive wire may have an insulating sheath. For example, the insulating sheath may comprise an insulating polymer resin. Specifically, the insulating sheath may comprise a polyvinyl chloride (PVC) resin, a polyethylene (PE) resin, a Teflon resin, a silicone resin, a polyurethane resin, or the like.

The conductive wire may have a diameter in the range of, for example, 1 mm to 10 mm, 2 mm to 7 mm, or 3 mm to 5 mm.

The conductive wire may be wound in the form of a planar coil. Specifically, the planar coil may comprise a planar spiral coil. In addition, the planar shape of the coil may be an ellipse, a polygon, or a polygonal shape with rounded corners, but it is not particularly limited thereto.

The planar coil may have an outer diameter of 5 cm to 100 cm, 10 cm to 50 cm, 10 cm to 30 cm, 20 cm to 80 cm, or 50 cm to 100 cm. As a specific example, the planar coil may have an outer diameter of 10 cm to 50 cm.

In addition, the planar coil may have an inner diameter of 0.5 cm to 30 cm, 1 cm to 20 cm, or 2 cm to 15 cm.

The number of turns of the planar coil may be 1 to 50 times, 5 to 30 times, 5 to 20 times, or 7 to 15 times. As a specific example, the planar coil may be formed by winding the conductive wire 7 to 15 times.

In addition, the distance between the conductive wires in the planar coil shape may be 0.1 cm to 1 cm, 0.1 cm to 0.5 cm, or 0.5 cm to 1 cm.

Within the preferred plane coil dimensions and specification ranges as described above, it can be appropriately used in the fields such as electric vehicles that require large-capacity power transmission, as well as various personal transportation means such as electric motorcycles, electric kickboards, electric scooters, electric wheelchairs, electric bicycles, and the like.

The coil unit may be disposed to be spaced apart from the magnetic unit by a predetermined interval. For example, the spaced distance between the coil unit and the magnetic unit may be 0.2 mm or more, 0.5 mm or more, 0.2 mm to 3 mm, or 0.5 mm to 1.5 mm.

**Magnetic unit**

The magnetic unit may form a magnetic path of a magnetic field formed around the coil unit and is disposed between the coil unit and the shield unit.

The magnetic unit may be disposed to be spaced apart from the shield unit by a predetermined interval. For example, the spaced distance between the magnetic unit and the shield unit may be 3 mm or more, 5 mm or more, 3 mm to 10 mm, or 4 mm to 7 mm.

In addition, the magnetic unit may be disposed to be spaced apart from the coil unit by a predetermined interval. For example, the spaced distance between the magnetic unit and the coil unit may be 0.2 mm or more, 0.5 mm or more, 0.2 mm to 3 mm, or 0.5 mm to 1.5 mm.

In such an event, the magnetic unit may comprise a polymer-type magnetic unit (first magnetic unit) comprising a filler and a binder resin.

The magnetic unit may further comprise a metallic magnetic unit, for example, a nanocrystalline magnetic unit (second magnetic unit).

In addition, the magnetic unit may further comprise an oxide-based magnetic unit (second magnetic unit).

The magnetic unit may comprise a composite thereof (a first magnetic unit and a second magnetic unit).

**Polymer-type magnetic unit**

The magnetic unit may comprise a polymer-type magnetic unit comprising a binder resin and a filler. Specifically, the magnetic unit may comprise a polymer-type magnetic unit comprising a binder resin and a filler dispersed in the binder resin. The polymer-type magnetic unit may comprise a polymer-type magnetic block (PMB).

According to an embodiment of the present invention, as the polymer-type magnetic unit comprising a filler and a binder resin is adopted, the inductance deviation, inductance change rate, and magnetic permeability change rate desired in the present invention can be achieved.

Since the fillers are combined with each other by the binder resin, the polymer-type magnetic unit may have fewer defects over a large area and less damage caused by an impact.

The filler may be an oxide filler such as ferrite (Ni-Zn-based, Mg-Zn-based, Mn-Zn-based ferrite, and the like); a metallic filler such as permalloy, sendust, and nanocrystalline magnetic materials; or a mixed powder thereof. More specifically, the filler may be sendust particles having a Fe-Si-Al alloy composition.

As an example, the filler may have a composition of the following Formula 1.

$$[\text{Formula 1}] \qquad Fe_{1-a-b-c}Si_a X_b Y_c$$

In the above formula, X is Al, Cr, Ni, Cu, or a combination thereof; Y is Mn, B, Co, Mo, or a combination thereof; $0.01 \le a \le 0.2$, $0.01 \le b \le 0.1$, and $0 \le c \le 0.05$. Specifically, in the above formula, X may be Al, Cr, or a combination thereof.

The filler may comprise sendust.

The filler may have an average particle diameter (D50) in the range of about 1 $\mu$m to 300 $\mu$m, about 10 $\mu$m to 200 $\mu$m, or about 30 $\mu$m to 150 $\mu$m. If the average particle diameter of the filler satisfies the above range, the thermal resistance of the polymer-type magnetic unit may be enhanced, and the inductance change rate and the magnetic permeability change rate according to temperature elevation may be reduced. As a result, the charging efficiency of the wireless charging device can be enhanced.

The filler may be employed in an amount of 60% by weight or more, 70% by weight or more, or 85% by weight or more, based on the total weight of the polymer-type magnetic unit.

For example, the polymer-type magnetic unit may comprise the filler in an amount of 60% by weight to 90% by weight, 70% by weight to 90% by weight, 75% by weight to 90% by weight, 78% by weight to 90% by weight, 80% by weight to 90% by weight, 85% by weight to 90% by weight, 87% by weight to 90% by weight, or 89% by weight to 90% by weight. If the content of the filler is less than 60% by weight, the thermal resistance of the polymer-type magnetic unit is deteriorated, and the inductance change rate and the magnetic permeability change rate according to temperature elevation may steeply increase. In particular, the wireless charging device may have an inductance deviation of less than zero. As a result, deformation and breakage of the magnetic unit may take place at high temperatures, resulting in a decrease in magnetic characteristics and charging efficiency.

The binder resin may have a melting point (Tm) of 150 to 210°C. For example, the melting point (Tm) of the binder resin may be 160 to 200°C, for example, 160 to 180°C. If the melting point (Tm) of the binder resin satisfies the above range, it is possible to minimize the displacement at a temperature of 150 to 180°C. Thus, since the thermal resistance and magnetic characteristics of the magnetic unit are further enhanced, it is possible to enhance the charging efficiency.

The binder resin may comprise at least one selected from the group consisting of a polyimide resin, a polyamide resin, a polyamide-imide resin, a polycarbonate resin, an acrylonitrile-butadiene-styrene (ABS) resin, a polypropylene resin, a polyethylene resin, a polystyrene resin, a polyphenylsulfide (PSS) resin, a polyether ether ketone (PEEK) resin, a silicone resin, an acrylic resin, a polyurethane resin, a polyester resin, an isocyanate resin, and an epoxy resin.

The binder resin may be a curable resin. Specifically, the binder resin may be a photocurable resin and/or a thermosetting resin. In particular, it may be a resin capable of exhibiting adhesiveness upon curing. More specifically, the binder resin may be a resin comprising at least one functional group or moiety that can be cured by heat such as a glycidyl group, an isocyanate group, a hydroxyl group, a carboxyl group, or an amide group; or at least one functional group or moiety that can be cured by active energy such as an epoxide group, a cyclic ether group, a sulfide group, an acetal group, or a lactone group. Such a functional group or moiety may be, for example, an isocyanate group (-NCO), a hydroxyl group (-OH), or a carboxyl group (-COOH).

Specifically, the binder resin may comprise at least one selected from the group consisting of a polyamide resin, a polycarbonate resin, and a polypropylene resin.

In addition, even if a resin having excellent thermal resistance is used as the binder resin, if it is not well mixed with the filler, it may be difficult to satisfy the desired inductance deviation, inductance change rate, and magnetic permeability change rate according to the embodiment of the present invention. Thus, it may be important to select the binder resin and the filler to be well mixed.

For example, the binder resin may be a polyamide resin, and the filler may be sendust.

The polymer-type magnetic unit may comprise the binder resin in an amount of 5% by weight to 40% by weight, 10% by weight to 40% by weight, 10% by weight to 20% by weight, 5% by weight to 20% by weight, 5% by weight to 15% by weight, or 7% by weight to 15% by weight.

In order to satisfy the desired inductance deviation, inductance change rate, and magnetic permeability change rate according to an embodiment of the present invention, the binder resin may be employed in an amount of 10% by weight to 40% by weight, and the filler may be employed in an amount of 80% by weight to 90% by weight.

Specifically, the binder resin may be employed in an amount of 10% by weight to 20% by weight, and the filler may be employed in an amount of 85% by weight to 90% by weight.

In addition, the polymer-type magnetic unit may further comprise an additive. Specifically, the polymer-type magnetic unit may further comprise at least one insulating coating agent selected from the group consisting of phosphoric acid and silane. The insulating coating agent is an additive used for forming an oxide film. The insulating coating agent may be added in an amount of 0.1 to 10% by weight, specifically 1% by weight to 8% by weight or 2% by weight to 8% by weight, based on the total weight of the polymer-type magnetic unit.

If the additive is employed in an amount within the above range, the thermal resistance of the polymer-type magnetic unit may be enhanced, and the inductance change rate and the magnetic permeability change rate according to temperature elevation may be reduced. In particular, the inductance deviation may satisfy 0 or more, thereby further enhancing the charging efficiency of the wireless charging device.

The polymer-type magnetic unit may be elongated at a certain ratio. For example, the elongation of the polymer-type magnetic unit may be 0.5% or more. The elongation characteristic is difficult to obtain in a ceramic-based magnetic unit to which a polymer is not applied. It may reduce damage even if a large-area magnetic unit is distorted by an impact. Specifically, the elongation of the polymer-type magnetic unit may be 0.5% or more, 1% or more, or 2.5% or more. There is no particular limitation to the upper limit of the elongation. However, if the content of the polymer resin is increased to enhance the elongation, such physical properties of the magnetic unit as inductance may be deteriorated. Thus, the elongation is preferably 10% or less.

The polymer-type magnetic unit has a small rate of change in physical properties before and after an impact and is significantly superior to those of conventional ferrite magnetic sheets.

In the present specification, the rate of change (%) in physical properties before and after an impact may be calculated by the following equation.

Rate of change (%) in characteristic = | characteristic value before impact - characteristic value after impact | / characteristic value before impact $\times$ 100

For example, when the polymer-type magnetic unit is subjected to free-falling from a height of 1 m, it may have a rate of change in inductance of less than 5% or 3% or less before and after the impact. More specifically, the rate of change in inductance may be 0% to 3%, 0.001% to 2%, or 0.01% to 1.5%. Within the above range, since the rate of change in inductance before and after an impact is relatively small, the stability of the magnetic unit may be further enhanced.

In addition, when the polymer-type magnetic unit is subjected to free-falling from a height of 1 m, it may have a rate of change in Q factor of 0% to 5%, 0.001% to 4%, or 0.01% to 2.5%, before and after the impact. Within the above range, since the change in physical properties before and after an impact is small, the stability and impact resistance of the magnetic unit may be further enhanced.

In addition, when the polymer-type magnetic unit is subjected to free-falling from a height of 1 m, it may have a rate of change in resistance of 0% to 2.8%, 0.001% to 1.8%, or 0.1% to 1.0%, before and after the impact. Within the above range, even if it is repeatedly applied in an environment where actual impact and vibration are applied, the resistance value can be well maintained below a certain level.

In addition, when the polymer-type magnetic unit is subjected to free-falling from a height of 1 m, it may have a rate of change in charging efficiency of 0% to 6.8%, 0.001% to 5.8%, or 0.01% to 3.4%, before and after the impact. Within the above range, even if a large-area magnetic unit is repeatedly subjected to impact or distortion, its physical properties can be more stably maintained.

**Nanocrystalline magnetic unit**

The magnetic unit may further comprise a nanocrystalline magnetic unit.

If the nanocrystalline magnetic unit is applied, the higher the distance from the coil unit, the lower the resistance (Rs) even if the inductance (Ls) of the coil unit is lowered, so that the quality factor (Q factor: Ls/Rs) of the coil is increased, which may enhance the charging efficiency and reduces the generation of heat.

For example, the nanocrystalline magnetic unit may be a Fe-based nanocrystalline magnetic unit. Specifically, it may be a Fe-Si-Al-based nanocrystalline magnetic unit, a Fe-Si-Cr-based nanocrystalline magnetic unit, or a Fe-Si-B-Cu-Nb-based nanocrystalline magnetic unit.

More specifically, the nanocrystalline magnetic unit may be a Fe-Si-B-Cu-Nb-based nanocrystalline magnetic unit. In such a case, it is preferable that Fe is 70% by element to 85% by element, the sum of Si and B is 10% by element to 29% by element, and the sum of Cu and Nb is 1% by element to 5% by element (wherein % by element refers to the percentage of the number of specific elements to the total number of elements constituting the magnetic unit). Within the above composition ranges, a Fe-Si-B-Cu-Nb-based alloy can be easily formed into a nanophase crystalline form by thermal treatment.

The nanocrystalline magnetic unit is prepared by, for example, a rapid solidification process (RSP) by melt-spinning an Fe-based alloy. It may be prepared by performing a zero-field thermal treatment for 30 minutes to 2 hours in a temperature range of 300 °C to 700 °C.

If the thermal treatment temperature is lower than 300°C, nanocrystals are not sufficiently formed, so that the desired magnetic permeability is not obtained, which requires a longer thermal treatment time. If it exceeds 700°C, the magnetic permeability may be significantly lowered by excessive thermal treatment. In addition, when the thermal treatment temperature is low, the treatment time is lengthened, and when the thermal treatment temperature is high, the treatment time is shortened, to adjust the desired permeability.

It is difficult to make the nanocrystalline magnetic unit thick due to the features of the preparation process. For example, it may be formed to a thickness of 15 $\mu$m to 35 $\mu$m.

The nanocrystalline magnetic unit may have magnetic characteristics in a specific range in the vicinity of a standard frequency for wireless charging of an electric vehicle. In addition, the nanocrystalline magnetic unit may have a certain level of magnetic characteristics in the vicinity of a standard frequency for wireless charging in various fields of personal transportation such as electric motorcycles, electric kickboards, electric scooters, electric wheelchairs, and electric bicycles.

For example, the nanocrystalline magnetic unit may have a magnetic permeability of 500 to 150,000 and a magnetic permeability loss of 100 to 50,000 at a frequency of 85 kHz. As an example, when the nanocrystalline magnetic unit comprises a crushed nanocrystalline magnetic material, it may have a magnetic permeability of 500 to 3,000 and a magnetic permeability loss of 100 to 1,000 at a frequency of 85 kHz. As another example, when the nanocrystalline magnetic unit comprises a non-crushed nanocrystalline magnetic material, it may have a magnetic permeability of 5,000 to 150,000 and a magnetic permeability loss of 1,000 to 10,000 at a frequency of 85 kHz.

**Oxide-based magnetic unit**

The magnetic unit may comprise an oxide-based magnetic unit.

For example, the oxide-based magnetic unit may be a ferrite-based material. A specific chemical formula thereof may be represented by $MOFe_2O_3$ (wherein M is one or more divalent metal elements such as Mn, Zn, Cu, and Ni). The ferrite-based material is preferably a sintered body from the viewpoint of such magnetic characteristics as magnetic permeability. More specifically, it may be a ferrite sintered body. The ferrite-based material may be prepared in the form of a sheet or block by mixing raw materials followed by calcining, pulverizing, mixing with a binder resin, molding, and sintering.

More specifically, the oxide-based magnetic unit may be a Ni-Zn-based, Mg-Zn-based, or Mn-Zn-based ferrite. In particular, Mn-Zn-based ferrite may exhibit high magnetic permeability, low magnetic permeability loss, and high saturation magnetic flux density over a temperature range of room temperature to 100°C or higher at a frequency of 79 kHz to 90 kHz.

The Mn-Zn-based ferrite comprises 66% by mole to 70% by mole of iron oxide $Fe_2O_3$, 10% by mole to 20% by mole of ZnO, 8% by mole to 24% by mole of MnO, and 0.4% by mole to 2% by mole of NiO as main components and may further comprise $SiO_2$, CaO, NbzOs, $ZrO_2$, SnO, and the like as additional subcomponents. The Mn-Zn-based ferrite may be prepared in the form of a sheet or a block by mixing the main components at predetermined molar ratios, calcining them in the air at a temperature of 800°C to 1,100°C for 1 hour to 3 hours, adding the subcomponents thereto and pulverizing them, mixing them with a binder resin such as polyvinyl alcohol (PVA) in an appropriate amount, press-molding them using a press, and sintering them by raising the temperature to 1,200°C to 1,300°C for 2 hours or longer. Thereafter, it is processed using a wire saw or a water jet and cut to a required size, if necessary.

The oxide-based magnetic unit may have magnetic characteristics in a specific range in the vicinity of a standard frequency for wireless charging of an electric vehicle. In addition, the oxide-based magnetic unit may have a certain level of magnetic characteristics in the vicinity of a standard frequency for wireless charging in various fields of personal transportation such as electric motorcycles, electric kickboards, electric scooters, electric wheelchairs, and electric bicycles.

For example, the oxide-based magnetic unit, specifically, ferrite-based material may have a magnetic permeability of 1,000 to 5,000, 1,000 to 4,000, or 2,000 to 4,000, and a magnetic permeability loss of 0 to 1,000, 0 to 100, or 0 to 50, at a frequency of 85 kHz.

**Process for preparing a magnetic unit**

The magnetic unit may comprise, for example, a polymer-type magnetic unit, and the polymer-type magnetic unit may be prepared by a sheet-forming process such as mixing a filler and a binder resin to form a slurry, then molding it into a sheet shape, and curing it.

In addition, it may be formed into a three-dimensional structure by a mold to prepare a large-area magnetic unit having a constant thickness using a thermoplastic resin. Specifically, a filler and a thermoplastic resin are kneaded using mechanical shear force and heat and then pelletized using a mechanical device by injection molding to prepare a block.

A conventional sheet-forming or block-forming method may be applied to the preparation process.

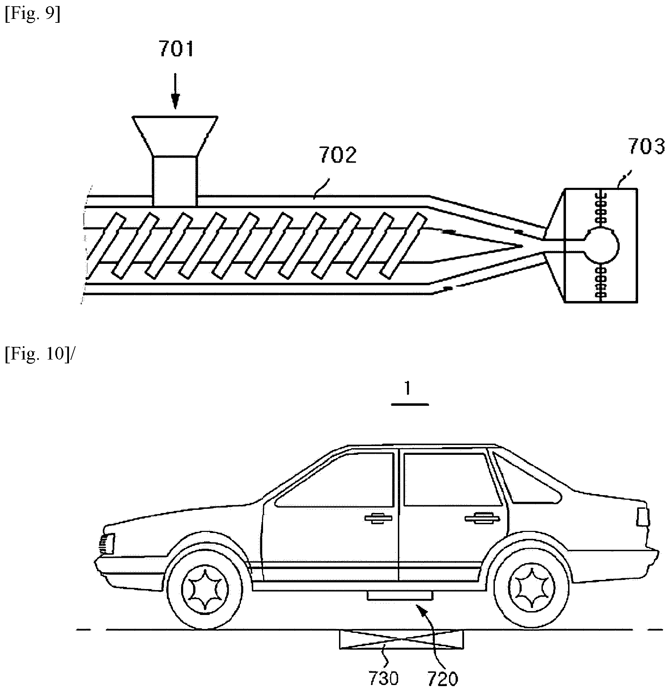

The molding may be carried out by injecting the raw materials for the magnetic unit into a mold by injection molding. More specifically, the magnetic unit may be prepared by mixing a filler and a polymer resin composition to obtain a raw material composition, and then injecting the raw material composition (701) into a mold (703) by an injection molding machine (702) as shown in Fig. 9. In such an event, the internal shape of the mold (703) may be designed as a three-dimensional structure, so that the three-dimensional structure of the magnetic unit may be easily achieved. Such a process may be advantageous in terms of the degree of freedom of the structure as compared with the case where a conventional sintered ferrite sheet is used as a magnetic unit.

**Area and thickness of the magnetic unit**

The magnetic unit may be a magnetic sheet, a magnetic sheet laminate, or a magnetic block.

The magnetic unit may have a large area. Specifically, it may have an area of 200 cm$^2$ or more, 400 cm$^2$ or more, or 600 cm$^2$ or more. In addition, the magnetic unit may have an area of 10,000 cm$^2$ or less.

The large-area magnetic unit may be configured by combining a plurality of magnetic units. In such an event, the area of the individual magnetic units may be 60 cm$^2$ or more, 90 cm$^2$ or more, or 95 cm$^2$ to 900 cm$^2$.

The magnetic sheet may have a thickness of 15 $\mu$m or more, 50 $\mu$m or more, 80 $\mu$m or more, 15 $\mu$m to 150 $\mu$m, 15 $\mu$m to 35 $\mu$m, or 85 $\mu$m to 150 $\mu$m. Such a magnetic unit may be prepared by a method of preparing a conventional film or sheet.

The magnetic sheet laminate may be one in which 20 or more or 50 or more magnetic sheets are laminated. In addition, the magnetic sheet laminate may be one in which 150 or fewer or 100 or fewer magnetic sheets are laminated.

The magnetic block may have a thickness of 1 mm or more, 2 mm or more, 3 mm or more, or 4 mm or more. In addition, the magnetic block may have a thickness of 10 mm or less.

**Shield unit**

The wireless charging device (10) according to an embodiment may further comprise a shield unit (400) that serves to increase the wireless charging efficiency through the shielding of electromagnetic waves.

The shield unit is disposed on one side of the coil.

The shield unit comprises a metal plate. The material thereof may be aluminum, and other metal or alloy materials having a shielding capability of electromagnetic waves may be used.

The shield unit may have a thickness of 0.2 mm to 10 mm, 0.5 mm to 5 mm, or 1 mm to 3 mm.

In addition, the shield unit may have an area of 200 cm$^2$ or more, 400 cm$^2$ or more, or 600 cm$^2$ or more.

**Housing**

The wireless charging device (10) according to an embodiment may further comprise a housing (600) for accommodating the coil unit (200) and the magnetic unit (300).

In addition, the housing (600) allows such components as the coil unit (200), the shield unit (400), and the magnetic unit (300) to be properly disposed and assembled. The shape (structure) of the housing may be arbitrarily determined according to the components accommodated therein or according to the environment. The material and structure of the housing may be a material and structure of a conventional housing used in a wireless charging device.

**Support unit**

The wireless charging device (10) according to an embodiment may further comprise a support unit (100) for supporting the coil unit (200). The material and structure of the support unit may be a material and structure of a conventional support unit used in a wireless charging device. The support --unit-- may have a flat plate structure or a structure in which a groove is formed in compliance with a coil shape to fix the coil unit.

[Various examples of a wireless charging device]

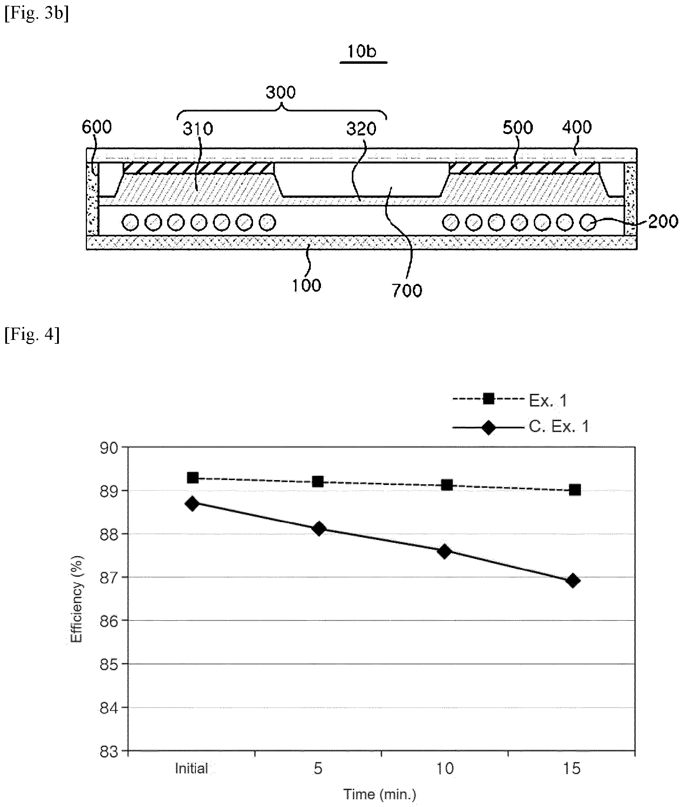

Figs. 3a and 3b show cross-sectional views of the wireless charging devices having various structures according to embodiments of the present invention.

Referring to Fig. 3a, the wireless charging device according to an embodiment comprises a coil unit (200); and a magnetic unit (300) disposed on the coil unit (200), and it may comprise a shield unit (400) spaced apart from the magnetic unit by a predetermined interval. In addition, it may further comprise an empty space or a spacer unit (700) between the magnetic unit (300) and the shield unit (400). In such an event, the magnetic unit (300) may comprise a polymer-type magnetic unit comprising a filler and a binder resin.

In addition, the magnetic unit may have a flat structure. Alternatively, the magnetic unit may have a three-dimensional structure. When the magnetic unit has a three-dimensional structure, the charging efficiency and heat dissipation characteristics may be enhanced.

Referring back to Fig. 3b, the magnetic unit may comprise two or more hybrid-type magnetic units. Specifically, the magnetic unit may comprise a first magnetic unit (300) and a second magnetic unit (500) different from each other.

The first magnetic unit (300) may comprise a polymer-type magnetic unit, and the second magnetic unit (500) may comprise a nanocrystalline or oxide-based magnetic unit.

The polymer-type magnetic unit as a first magnetic unit (300) may comprise an outer part (310) corresponding to a part where the coil unit (200) is disposed; and a central part (320) surrounded by the outer part (310), wherein the outer part (310) may have a thickness greater than the thickness of the central part (320). In such an event, the outer part and the central part in the first magnetic unit may be integrally formed with each other. Alternatively, the outer part and the central part in the first magnetic unit may have the same thickness.

As described above, as the thickness of the magnetic unit near the coil where electromagnetic energy is concentrated during wireless charging is increased and as the thickness of the magnetic unit in its center having a relatively low electromagnetic energy density since no coil is disposed there is decreased, it is possible not only to effectively concentrate electromagnetic waves focused around the coil, thereby enhancing the charging efficiency, but also to maintain the distance between the coil and the shield unit firmly without a separate spacer, whereby it is possible to reduce the material and process costs due to the use of a spacer and the like.

In the first magnetic unit, the outer part may have a thickness that is thicker than that of the central part by 1.5 times or more. Within the above thickness ratio, it is possible to more effectively focus electromagnetic waves concentrated around the coil to enhance the charging efficiency, and it is also advantageous for heat dissipation and weight reduction. Specifically, in the first magnetic unit, the thickness ratio of the outer part to the central part may be 2 or more, 3 or more, or 5 or more. In addition, the thickness ratio may be 100 or less, 50 or less, 30 or less, or 10 or less. More specifically, the thickness ratio may be 1.5 to 100, 2 to 50, 3 to 30, or 5 to 10.

The thickness of the outer part of the first magnetic unit may be 1 mm or more, 3 mm or more, or 5 mm or more, and 30 mm or less, 20 mm or less, or 11 mm or less. In addition, the thickness of the central part of the first magnetic unit may be 10 mm or less, 7 mm or less, or 5 mm or less, and 0 mm, 0.1 mm or more, or 1 mm or more. Specifically, the outer part of the first magnetic unit may have a thickness of 5 mm to 11 mm, and the central part thereof may have a thickness of 0 mm to 5 mm.

When the thickness of the central part (320) of the first magnetic unit (300) is 0, the first magnetic unit (300) may have an empty shape in the central part (320) (e.g., a donut shape). In such a case, the first magnetic unit may effectively enhance the charging efficiency even with a smaller area.

For example, referring to Fig. 3b, the wireless charging device comprises a coil unit (200); and a magnetic unit disposed on the coil unit (200), wherein the magnetic unit may comprise a first magnetic unit (300) and a second magnetic unit (500). In addition, at least a portion of the second magnetic unit may be in contact with a shield unit (400). As a result, the heat generated in the second magnetic unit may be effectively discharged through the shield unit. For example, when the second magnetic unit is a nanocrystalline or oxide-based magnetic unit and it is in the form of a sheet, one side thereof in its entirety may be in contact with the shield unit. Specifically, the second magnetic unit may be attached to one side of the shield unit facing the first magnetic unit. The second magnetic unit may be attached to one side of the shield unit with a thermally conductive adhesive, thereby further enhancing the heat dissipation effect. The thermally conductive adhesive may comprise a thermally conductive material such as a metal-based, carbon-based, or ceramic-based adhesive, for example, an adhesive resin in which thermally conductive particles are dispersed.

In addition, according to an embodiment of the present invention, a first magnetic unit, for example, a polymer-type magnetic unit that satisfies the permeability change rate is adopted. It may be designed in various ways within a range that does not impair the effects of the present invention in which it is arranged in various complex structures together with magnetic units of other materials.

The wireless charging device according to an embodiment of the present invention may have a charging efficiency of 85% or more, 88% or more, 89% or more, 90% or more, or 91% or more.

For example, when wireless power having a frequency of 85 kHz and an output of 6.6 kW is transmitted to the coil unit for 15 minutes, the charging efficiency may be 87% or more, 88% or more, 89% or more, 90% or more, or 91% or more.

Accordingly, the wireless charging device can be advantageously used in electric vehicles requiring large-capacity power transmission between a transmitter and a receiver, as well as various personal transportation means such as electric motorcycles, electric kickboards, electric scooters, electric wheelchairs, electric bicycles, and the like.

**[Magnetic element]**

According to an embodiment of the present invention, it is possible to provide a magnetic element, which comprises a polymer-type magnetic unit (first magnetic unit) comprising a filler and a binder resin, wherein the first magnetic permeability change rate ($\Delta P1$) represented by the above Equation 6 is 0/°C or more:
The configuration and characteristics of each component of the polymer-type magnetic unit are as described above.

As the magnetic element according to an embodiment of the present invention comprises a polymer-type magnetic unit having the above characteristics, it is possible to provide stability at high temperatures, which solves the problem that the charging efficiency is reduced due to deformation and breakage of the magnetic element at high temperatures.

In particular, as the binder resin, the type and content of the filler, and various additives are optimally combined and adjusted, the desired inductance deviation, inductance change rate, and permeability change rate of the magnetic unit may be satisfied within the specific ranges according to an embodiment of the present invention. In such a case, the effect of increasing the charging efficiency can be enhanced, and the decrease in charging efficiency can be minimized even when the temperature is elevated or the heat generation increases.

**[Transportation means]**

The wireless charging device according to an embodiment can be advantageously used in electric vehicles requiring large-capacity power transmission between a transmitter and a receiver, as well as various personal transportation means such as electric motorcycles, electric kickboards, electric scooters, electric wheelchairs, electric bicycles, and the like.

Referring to Fig. 10, the electric vehicle (1) according to an embodiment comprises a wireless charging device according to the embodiment as a receiver (720).

The wireless charging device may serve as a receiver for wireless charging of the electric vehicle (1) and may receive power from a transmitter (730) of a wireless charging system.

The transportation means comprises a wireless charging device, and the configuration and characteristics of each component of the wireless charging device are as described above.

The transportation means may further comprise a battery for receiving power from the wireless charging device. The wireless charging device may receive power wirelessly and transmit it to the battery, and the battery may supply power to the driving system of the electric vehicle. The battery may be charged by power transmitted from the wireless charging device or other additional wired charging devices.

In addition, the transportation means may further comprise a signal transmitter for transmitting information about the charging to the transmitter of the wireless charging system. The information about such charging may be charging efficiency such as charging speed, charging state, and the like.

**Mode for the Invention**

Hereinafter, specific embodiments of the present invention will be described. However, the embodiments described below are intended only to illustrate or explain the present invention. The present invention should not be limited thereto.

**Example**

**Example 1: Manufacture of a wireless charging device**

**Step 1: Preparation of a polymer-type magnetic unit (PMB magnetic sheet)**

15% by weight of a polyamide resin (product name: L1724k, manufacturer: Daicel-Evonik) as a binder resin, 80% by weight of sendust (product name: C1F-02A, manufacturer: Crystallite Technology) as a filler, and 5% by weight of phosphoric acid and silane as additives were used to prepare pellets in an extruder under the conditions of a temperature of about 170 to 200°C and 120 to 150 rpm. The pellets were injected in an injection machine at a temperature of about 250°C to obtain a polymer-type magnetic unit (PMB magnetic sheet) having a thickness of 5 mm.

**Step 2: Manufacture of a wireless charging device**

The magnetic unit of step 1 was used to obtain a wireless charging device comprising a coil unit comprising a conductive wire, the magnetic unit, and a shield unit.

**Comparative Example 1**

A magnetic unit and a wireless charging device comprising the same were obtained in the same manner as in Example 1, except that the additives of phosphoric acid and silane were not used.

**Test Example**

**(1) Magnetic permeability of a magnetic unit**

The magnetic permeability of the magnetic unit was measured at a frequency of 85 kHz using a 4294A device of Agilent.

**(2) Inductance**

The inductance was measured using a rectangular planar coil having an inductance of 30 $\mu$H, a coil diameter of 5 mm, and 1000 strands, a magnetic unit having a volume of 320 mm $\times$ 320 mm $\times$ 5 mm, and an aluminum (Al) shield unit of 350 mm $\times$ 350 mm $\times$ 2 mm and using an LCR meter (IM3536 device of Hioki). Once the device had been connected to the coil unit, the inductance (Ls) was measured while the LCR meter was set to 85 kHz, from which the inductance deviation and inductance change rate were measured.

In the Examples and Comparative Examples, all measurements were made under the same conditions, and the measured inductance deviation and inductance change rate were calculated and shown in Tables 2 and 3 below.

**(3) Measurement of charging efficiency**

The charging efficiency was measured by SAE J2954 WPT2 Z2 class standard test method. Specifically, a coil unit and a frame under the SAE J2954 WPT2 Z2 class standard test specifications were used, and a magnetic unit, a spacer, and an aluminum (Al) shield unit were stacked to prepare a receiving pad (35 cm $\times$ 35 cm) and a transmitting pad (75 cm $\times$ 60 cm). The charging efficiency was evaluated under the same conditions of an output power of 6.6 kW at a frequency of 85 kHz.

**(4) Measurement of heat generation temperature**

The wireless charging devices obtained in the Examples and Comparative Examples were each placed in a housing to obtain a wireless charging device.

The lower surface temperature of the wireless charging device was measured under the SAE J2954 WPT2 Z2 class Standard TEST charging efficiency measurement conditions when the coil unit received wireless power having a frequency of 85 kHz and an output of 6.6 kW for 30 minutes.

Specifically, the lower surface temperature of the magnetic unit was measured using a T/GUARD 405-SYSTEM of Qualitrol based on the center (maximum heat generation temperature) of the position corresponding to the coil unit among the lower surfaces of the magnetic units of the Examples and Comparative Examples.

The results are shown in Tables 1 to 3 below and Figs. 4 to 8.

[Table 1]

|  |  |  | C. Ex. 1 | Ex. 1 |
|---|---|---|---|---|
|  |  |  | 6.6 kW | 6.6 kW |
| Efficiency (%) |  | Initial | 88.7 | 89.3 |
|  |  | 5 min. | 88.1 | 89.2 |
|  |  | 10 min. | 87.6 | 89.1 |
|  |  | 15 min. | 86.9 | 89 |
| Heat generation temp. (°C) | 5 min. | Coil unit | 39.1 | 47.8 |
|  |  | Lower surface of coil unit | 47.8 | 58.9 |
|  | 10 min. | Coil unit | 54.8 | 66.4 |
|  |  | Lower surface of coil unit | 66.2 | 84 |
|  | 15 min. | Coil unit | 82.7 | 81.3 |
|  |  | Lower surface of coil unit | 100.5 | 100.6 |

[Table 2]

|  | Inductance change rate (%) at 150°C | |
|---|---|---|
| Time | C. Ex. 1 | Ex. 1 |
| 10 min. | -1.02 | -0.18 |
| 20 min. | -0.65 | -0.09 |
| 30 min. | -1.47 | 0 |

[Table 3]

|  | Comparative Example 1 | | | Example 1 | | |
|---|---|---|---|---|---|---|
| Temp. (°C) | Inductance (μH) | Inductance change rate (%) | Magnetic permeability (u') | Inductance (μH) | Inductance change rate (%) | Magnetic permeability (u') |
| -40 | 36.24 | -8.8 | 80 | 30.80 | -24.5 | 75 |
| -20 | 39.02 | -1.8 | 86 | 34.35 | -15.8 | 81 |
| -10 | 40.06 | 0.8 | 88 | 35.82 | -12.2 | 83 |
| 0 | 40.38 | 1.6 | 89 | 37.29 | -8.6 | 86 |
| 10 | 40.38 | 1.6 | 89 | 38.72 | -5.1 | 89 |

(continued)

| Temp. (°C) | Comparative Example 1 | | | Example 1 | | |
|---|---|---|---|---|---|---|
| | Inductance (µH) | Inductance change rate (%) | Magnetic permeability (u') | Inductance (µH) | Inductance change rate (%) | Magnetic permeability (u') |
| 20 | 40.06 | 0.8 | 88 | 40.19 | -1.5 | 92 |
| 25 | 39.74 | 0 | 88 | 40.80 | 0 | 94 |
| 40 | 38.67 | -2.7 | 85 | 42.39 | 3.9 | 97 |
| 60 | 36.72 | -7.6 | 81 | 43.41 | 6.4 | 100 |
| 80 | 34.45 | -13.3 | 77 | 43.62 | 6.9 | 101 |
| 100 | 31.87 | -19.8 | 73 | 43.17 | 5.8 | 99 |
| 120 | 29.61 | -25.5 | 70 | 42.31 | 3.7 | 97 |
| Eq. 1 (ID1) | -0.133 | - | - | - | 0.069 | - |
| Eq. 2 (ID2) | -3.02 | - | - | - | 0.064 | - |
| Eq. 3 (ID3) | -0.198 | - | - | - | 0.058 | - |
| Eq. 5 (ID4) | -0.027 | - | - | - | 0.039 | - |
| Eq. 4 (ΔID) (/°C) | -0.00855 | - | - | - | 0.00095 | - |
| Eq. 6 (ΔP1) (/°C) | - | - | -0.05 | - | - | 0.3 |
| Eq. 7 (ΔP2) (/°C) | - | - | -0.15 | - | - | 0.25 |

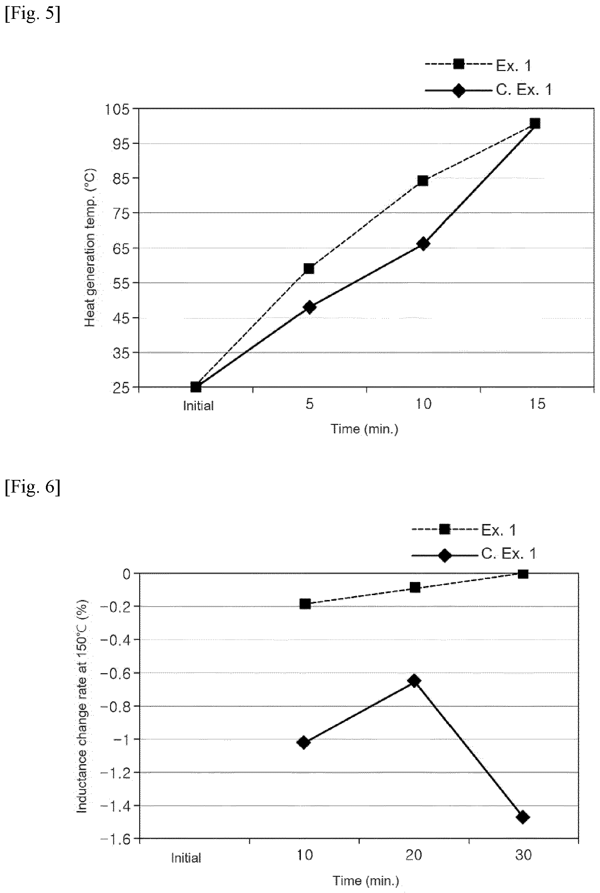

As can be seen from Tables 1 to 3 and Figs. 4 and 5, the wireless charging device of Example 1 satisfied the ranges of inductance deviation, inductance change rate, and magnetic permeability change rate according to the embodiments of the present invention, as compared with the wireless charging device of Comparative Example 1. As a result, the charging efficiency was enhanced, and the charging efficiency was maintained or its reduction was low even when the heat generation temperature was elevated.

Specifically, as can be seen from Table 1 and Figs. 4 and 5, in the wireless charging device of Example 1, the charging efficiency was maintained almost constant within 0.3% from the beginning of the wireless power transmission until the wireless power was transmitted for 15 minutes, even when the heat generation temperature of the coil unit and the magnetic unit was further increased, as compared with the wireless charging device of Comparative Example 1. In contrast, in Comparative Example 1, the rate of decrease in charging efficiency was further increased although the heat generation temperature of the magnetic unit was slightly lower than that of the magnetic unit of Example 1.

In addition, as can be seen from Table 2 and Fig. 6, in the wireless charging device of Example 1, the inductance change rate at 150°C was almost maintained or increased over time, as compared with the wireless charging device of Comparative Example 1.

Specifically, in the wireless charging device of Example 1, when wireless power was transmitted for 10 to 30 minutes, the inductance change rate at 150°C gradually increased to 0.3% or less, as compared with the wireless charging device of Comparative Example 1. In contrast, the inductance change rate of the wireless charging device of Comparative Example 1 was steeply reduced as compared with the inductance change rate of the wireless charging device of Example 1. That is, in the wireless charging device of Example 1, the magnetic permeability even at a high temperature of 150°C was hardly changed, indicating that there was almost no change in inductance. In contrast, in the wireless charging device of Comparative Example 1, when wireless power was transmitted for 30 minutes, the inductance change rate steeply decreased while maintaining a negative (-) value.

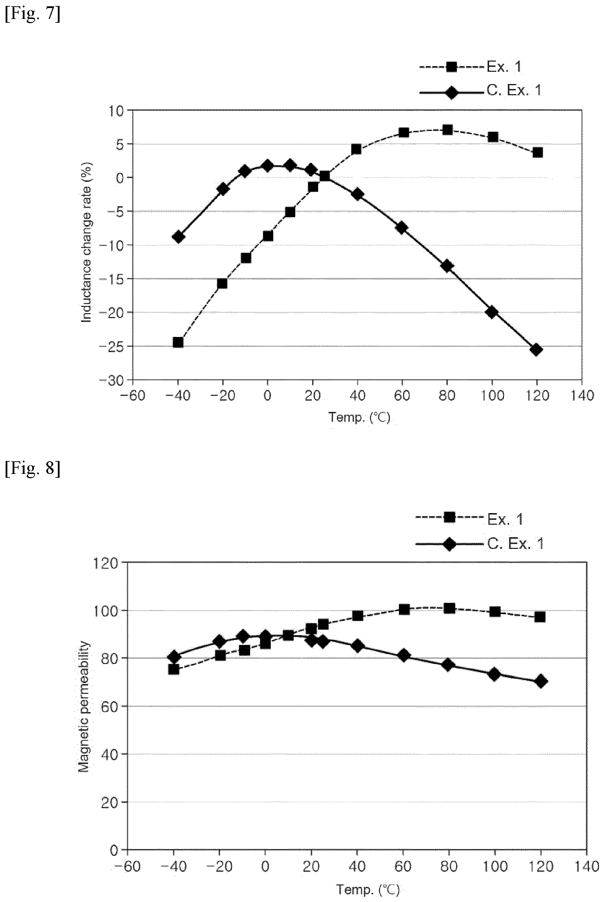

As can be seen from Table 3 and Figs. 7 and 8, in the wireless charging device of Example 1, all of the inductance deviations (ID1) at 40°C, 60°C, 80°C, and 100°C had positive (+) values, and both of the first magnetic permeability change rate (ΔP1) and the second magnetic permeability change rate (ΔP2) of the magnetic unit had positive (+) values.

In addition, when the temperature was elevated from 25°C to 120°C, the inductance change rate and magnetic permeability change rate of the polymer-type magnetic unit were 10% or less, respectively.

In contrast, in the wireless charging device of Comparative Example 1, all of the inductance deviations (ID1) at 40°C, 60°C, 80°C, and 100°C had negative (-) values, and both of the first magnetic permeability change rate ($\Delta$P1) and the second magnetic permeability change rate ($\Delta$P2) of the magnetic unit had negative (-) values. In addition, when the temperature was elevated from 25°C to 120°C, the inductance change rate was steeply decreased, and the magnetic permeability change rate of the polymer-type magnetic unit was steeply changed as well.

It was confirmed from the above results that the wireless charging device comprising the polymer-type magnetic unit of Example 1 had excellent high-temperature stability and maintained excellent charging efficiency even at high temperatures.

<Explanation of Reference Numerals>

1: transportation means (electric vehicle)
10, 10a, 10b: wireless charging device

| | |
|---|---|
| 100: support unit | 200: coil unit |
| 300: magnetic unit (first magnetic unit) | 310: outer part |
| 320: central part | 400: shield unit |

500: second magnetic unit
600: housing
700: spacer unit

| | |
|---|---|
| 701: raw material composition | 702: injection molding machine |

703: mold

| | |
|---|---|
| 720: receiver | 730: transmitter |

A-A': cutting line

**Claims**

1.  A wireless charging device, which comprises a coil unit; and a magnetic unit disposed on the coil unit, wherein the inductance deviation (ID1) at 80°C represented by the following Equation 1 is 0 or more:

[Equation 1]

$$ID1 = \frac{I80 - I25}{I25}$$

wherein I25 is the inductance of the wireless charging device measured at a temperature of 25°C, and I80 is the inductance of the wireless charging device measured at a temperature of 80°C.

2.  The wireless charging device of claim 1, wherein the inductance deviation (ID2) at 60°C represented by the following Equation 2 is 0 or more:

[Equation 2]

$$ID2 = \frac{I60 - I25}{I25}$$

wherein I25 is the inductance of the wireless charging device measured at a temperature of 25°C, and I60 is the inductance of the wireless charging device measured at a temperature of 60°C.

3. The wireless charging device of claim 1, wherein the inductance deviation (ID3) at 100°C represented by the following Equation 3 is 0 or more:

[Equation 3]

$$ID3 = \frac{I100 - I25}{I25}$$

wherein I25 is the inductance of the wireless charging device measured at a temperature of 25°C, and I100 is the inductance of the wireless charging device measured at a temperature of 100°C.

4. The wireless charging device of claim 3, wherein the inductance change rate (ΔID) represented by the following Equation 4 is greater than 0/°C:

[Equation 4]

$$\Delta ID = \frac{ID3 - ID4}{20\,°C}$$

wherein ID4 is represented by the following Equation 5,

[Equation 5]

$$ID4 = \frac{I40 - I25}{I25}$$

wherein I25 is the inductance of the wireless charging device measured at a temperature of 25°C, and I40 is the inductance of the wireless charging device measured at a temperature of 40°C.

5. A wireless charging device, which comprises a coil unit; and a magnetic unit disposed on the coil unit, wherein the first magnetic permeability change rate (ΔP1) of the magnetic unit represented by the following Equation 6 is 0/°C or more:

[Equation 6]

$$\Delta P1 = \frac{P20 - P0}{20\,°C}$$

wherein P20 is the magnetic permeability of the magnetic unit measured at a temperature of 20°C, and P0 is the magnetic permeability of the magnetic unit measured at a temperature of 0°C.

6. The wireless charging device of claim 5, wherein the second magnetic permeability change rate (ΔP2) of the magnetic unit represented by the following Equation 7 is 0/°C or more:

[Equation 7]

$$\Delta P2 = \frac{P40 - P20}{20\,℃}$$

wherein P20 is the magnetic permeability of the magnetic unit measured at a temperature of 20°C, and P40 is the magnetic permeability of the magnetic unit measured at a temperature of 40°C.

7. The wireless charging device of claim 5, wherein the magnetic unit has a maximum magnetic permeability at a temperature of 60°C to 100°C.

8. The wireless charging device of claim 1 or 5, wherein the magnetic unit comprises a polymer-type magnetic unit comprising a binder resin and a filler.

9. The wireless charging device of claim 8, wherein the filler is employed in an amount of 60% by weight to 90% by weight based on the total weight of the polymer-type magnetic unit, and it has an average particle diameter (D50) of 1 μm to 300 μm.

10. The wireless charging device of claim 8, wherein the polymer-type magnetic unit further comprises an additive, and the additive comprises at least one selected from the group consisting of phosphoric acid and silane.

11. A transportation means, which comprises a wireless charging device, wherein the wireless charging device comprises a coil unit; and a magnetic unit disposed on the coil unit, and

    the inductance deviation (ID1) of the wireless charging device at 80°C represented by the following Equation 1 is 0 or more, or
    the first magnetic permeability change rate (ΔP1) of the magnetic unit represented by the following Equation 6 is 0/°C or more, or
    both are satisfied:

[Equation 1]

$$ID1 = \frac{I80 - I25}{I25}$$

wherein I25 is the inductance of the wireless charging device measured at a temperature of 25°C, and I80 is the inductance of the wireless charging device measured at a temperature of 80°C,

[Equation 6]

$$\Delta P1 = \frac{P20 - P0}{20\,℃}$$

wherein P20 is the magnetic permeability of the magnetic unit measured at a temperature of 20°C, and P0 is the magnetic permeability of the magnetic unit measured at a temperature of 0°C.

[Fig. 1]

<u>10</u>

[Fig. 2]

[Fig. 3a]

[Fig. 3b]

[Fig. 4]

[Fig. 5]

[Fig. 6]

[Fig. 7]

[Fig. 8]

EP 4 243 041 A1

[Fig. 9]

701

702

703

[Fig. 10]/

1

730  720

28

## INTERNATIONAL SEARCH REPORT

| International application No. |
| --- |
| **PCT/KR2021/014572** |

| A. | CLASSIFICATION OF SUBJECT MATTER |
| --- | --- |

**H01F 27/22**(2006.01)i; **H02J 50/10**(2016.01)i; **H01F 38/14**(2006.01)i; **H02J 50/00**(2016.01)i; **B60L 53/12**(2019.01)i

According to International Patent Classification (IPC) or to both national classification and IPC

| B. | FIELDS SEARCHED |
| --- | --- |

Minimum documentation searched (classification system followed by classification symbols)

H01F 27/22(2006.01); B60L 11/18(2006.01); H01F 27/25(2006.01); H01F 27/28(2006.01); H02J 17/00(2006.01); H02J 7/00(2006.01); H05K 9/00(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 무선 충전(wireless charging), 코일(coil), 자성부(magnetic part), 인덕턴스(inductance), 투자율(permeability), 온도(temperature)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | KR 10-2166881 B1 (LG INNOTEK CO., LTD.) 16 October 2020 (2020-10-16)<br>See paragraphs [0002], [0067] and [0073]-[0074]; and claims 1 and 9. | 5-6,8,11 |
| Y | | 9-10 |
| A | | 1-4,7 |
| Y | KR 10-2013-0080817 A (NITTO DENKO CORPORATION) 15 July 2013 (2013-07-15)<br>See paragraphs [0055]-[0057]. | 9-10 |
| A | KR 10-1399023 B1 (AMOSENSE CO., LTD.) 27 May 2014 (2014-05-27)<br>See paragraphs [0038]-[0077]; and figures 1-2. | 1-11 |
| A | US 9496732 B2 (MOJO MOBILITY, INC.) 15 November 2016 (2016-11-15)<br>See claims 1-18; and figures 20-21. | 1-11 |

✓ Further documents are listed in the continuation of Box C.　　✓ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **24 January 2022** | **24 January 2022** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**

International application No.

**PCT/KR2021/014572**

**C.      DOCUMENTS CONSIDERED TO BE RELEVANT**

| Category* | Citation of document, with indication, where appropriate, of the relevant passages | Relevant to claim No. |
|---|---|---|
| A | KR 10-2098242 B1 (SKC CO., LTD.) 07 April 2020 (2020-04-07) See paragraphs [0053]-[0137]. | 1-11 |

Form PCT/ISA/210 (second sheet) (July 2019)

INTERNATIONAL SEARCH REPORT
Information on patent family members

International application No.

**PCT/KR2021/014572**

| Patent document cited in search report | | | Publication date (day/month/year) | Patent family member(s) | | | Publication date (day/month/year) |
|---|---|---|---|---|---|---|---|
| KR | 10-2166881 | B1 | 16 October 2020 | CN | 104979913 | A | 14 October 2015 |
| | | | | CN | 104979913 | B | 23 February 2018 |
| | | | | CN | 108110901 | A | 01 June 2018 |
| | | | | EP | 2928039 | A1 | 07 October 2015 |
| | | | | EP | 2928039 | B1 | 18 July 2018 |
| | | | | EP | 3404793 | A1 | 21 November 2018 |
| | | | | EP | 3404793 | B1 | 19 February 2020 |
| | | | | JP | 2015-202038 | A | 12 November 2015 |
| | | | | JP | 6085326 | B2 | 22 February 2017 |
| | | | | KR | 10-1998700 | B1 | 10 July 2019 |
| | | | | KR | 10-2015-0115271 | A | 14 October 2015 |
| | | | | US | 10361026 | B2 | 23 July 2019 |
| | | | | US | 10546685 | B2 | 28 January 2020 |
| | | | | US | 2015-0288196 | A1 | 08 October 2015 |
| | | | | US | 2018-0108471 | A1 | 19 April 2018 |
| | | | | US | 2019-0267185 | A1 | 29 August 2019 |
| | | | | US | 9871383 | B2 | 16 January 2018 |
| KR | 10-2013-0080817 | A | 15 July 2013 | CN | 103198917 | A | 10 July 2013 |
| | | | | CN | 103198917 | B | 22 June 2016 |
| | | | | EP | 2613329 | A1 | 10 July 2013 |
| | | | | EP | 2613329 | B1 | 25 June 2014 |
| | | | | JP | 2013-140880 | A | 18 July 2013 |
| | | | | JP | 5965148 | B2 | 03 August 2016 |
| | | | | TW | 201340527 | A | 01 October 2013 |
| | | | | TW | I578656 | B | 11 April 2017 |
| | | | | US | 2013-0175984 | A1 | 11 July 2013 |
| | | | | US | 9466994 | B2 | 11 October 2016 |
| KR | 10-1399023 | B1 | 27 May 2014 | CN | 104011814 | A | 27 August 2014 |
| | | | | CN | 104011814 | B | 15 August 2017 |
| | | | | EP | 2797092 | A1 | 29 October 2014 |
| | | | | EP | 2797092 | A4 | 07 October 2015 |
| | | | | EP | 2797092 | B1 | 08 February 2017 |
| | | | | JP | 2015-505166 | A | 16 February 2015 |
| | | | | JP | 2018-085516 | A | 31 May 2018 |
| | | | | JP | 6283615 | B2 | 21 February 2018 |
| | | | | KR | 10-2013-0072181 | A | 01 July 2013 |
| | | | | US | 10010018 | B2 | 26 June 2018 |
| | | | | US | 10123467 | B2 | 06 November 2018 |
| | | | | US | 11006553 | B2 | 11 May 2021 |
| | | | | US | 2015-0123604 | A1 | 07 May 2015 |
| | | | | US | 2016-0081237 | A1 | 17 March 2016 |
| | | | | US | 2016-0081238 | A1 | 17 March 2016 |
| | | | | US | 2016-0081239 | A1 | 17 March 2016 |
| | | | | US | 2016-0081240 | A1 | 17 March 2016 |
| | | | | US | 2019-0045676 | A1 | 07 February 2019 |
| | | | | US | 2021-0185865 | A1 | 17 June 2021 |
| | | | | US | 9252611 | B2 | 02 February 2016 |
| | | | | US | 9504194 | B2 | 22 November 2016 |
| | | | | US | 9930818 | B2 | 27 March 2018 |
| | | | | WO | 2013-095036 | A1 | 27 June 2013 |

Form PCT/ISA/210 (patent family annex) (July 2019)

## INTERNATIONAL SEARCH REPORT
### Information on patent family members

International application No.

**PCT/KR2021/014572**

| Patent document cited in search report | | | Publication date (day/month/year) | Patent family member(s) | | | Publication date (day/month/year) |
|---|---|---|---|---|---|---|---|
| US | 9496732 | B2 | 15 November 2016 | US | 2013-0285604 | A1 | 31 October 2013 |
| KR | 10-2098242 | B1 | 07 April 2020 | KR | 10-2020-0022996 | A | 04 March 2020 |

Form PCT/ISA/210 (patent family annex) (July 2019)

**EP 4 243 041 A1**

**Patent documents cited in the description**

- KR 20110042403